# EUROPÄISCHE PATENTSCHRIFT

(11) **EP 3 000 309 B1**
(45) Veröffentlichungstag und Bekanntmachung des Hinweises auf die Patenterteilung: **20.03.2019**
(21) Anmeldenummer: 15173848.1
(22) Anmeldetag: 25.06.2015
(51) Int. Cl.: A01F 12/44

(54) **MÄHDRESCHER MIT EINER NACH DEM AXIALFLUSSPRINZIP ARBEITENDEN ABSCHEIDEEINRICHTUNG ZUR SEPARIERUNG VON BESTANDTEILEN EINES ERNTEGUTSTROMES**
COMBINE HARVESTER WITH A SEPARATION DEVICE FOR SEPARATING COMPONENTS OF A FLOW OF CROP MATERIAL WHICH OPERATES ACCORDING TO THE AXIAL FLOW PRINCIPLE
MOISSONNEUSE-BATTEUSE DOTÉE D'UN DISPOSITIF DE SÉPARATION FONCTIONNANT SELON LE PRINCIPE DE FLUX AXIAL DESTINÉE À SÉPARER DES COMPOSANTS D'UN FLUX DE PRODUIT RÉCOLTÉ

(30) Priorität: 24.09.2014 DE 102014113802
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)
(74) Vertreter: CLAAS Gruppe

(56) Entgegenhaltungen:
- DE-A1- 3 717 501
- GB-A- 2 354 689
- US-A- 4 869 272

## Beschreibung

Die vorliegende Erfindung betrifft einen Mähdrescher mit einer nach dem Axialflussprinzip arbeitenden Abscheideeinrichtung zur Separierung von Bestandteilen eines Erntegutstromes gemäß dem Oberbegriff des Anspruches 1.

Mähdrescher mit nach dem Axialflussprinzip arbeitenden Abscheideeinrichtungen trennen einen ihnen zugeführten Erntegutstrom von Korn und Nichtkornbestandteilen (NBK), die im Wesentlichen aus Kaff und Stroh bestehen, auf. Das aus dem Erntegutstrom abgeschiedene Korn wird von der Abscheideeinrichtung an einen unterhalb dieser angeordneten Förderboden abgegeben. Dabei gelangt nicht nur Korn sondern auch Kaff und Kurzstroh (NKB) unmittelbar oder mittelbar mittels eines Förderbodens auf Reinigungssiebe der Reinigungsvorrichtung. Das restliche Stroh wird von der Abscheidevorrichtung einer in Gutförderrichtung gesehen hinter dieser angeordneten Häcksel- und/oder Verteileinrichtung zugeführt. Die Reinigungsvorrichtung umfasst im Allgemeinen zwei oszillierend angetriebene Reinigungssiebe, um das Korn von den verbleibenden Nichtkornbestandteilen zu befreien. Hierzu werden die Reinigungssiebe mittels eines Reinigungsgebläses mit einem Luftstrom beaufschlagt, um die leichteren Nichtkornbestandteile von dem schwereren Korn zu trennen und aus dem Mähdrescher zu befördern. Mit zunehmender Leistungsfähigkeit der Mähdrescher steigen die Anforderungen an den Erntegutdurchsatz, wobei sich die Reinigungsvorrichtung oftmals als limitierendes Arbeitsorgan des Mähdreschers erweist. Mit zunehmender Erntegutmenge, die von dem Mähdrescher verarbeitet wird, steigt auch die Belastung der Reinigungsvorrichtung, insbesondere durch Kaff und Kurzstroh, an.

Um die Reinigungsvorrichtung eines Mähdreschers zu entlasten, wurde in der US 4,869,272 A vorgeschlagen im Auswurfbereich der Abscheidevorrichtung ein Sauggebläse anzuordnen, welches von der Abscheidevorrichtung abgegebene Nichtkornbestandteile ansaugt. Als nachteilig an diesem Mähdrescher erweist sich, dass das endseitig der Abscheidevorrichtung angeordnete Sauggebläse sich auf das Sichten mittels des von dem Reinigungsgebläses kommenden Luftstrom auswirkt, da das Wirkprinzip gemäß der US 4,869,272 A vorsieht, mittels großer Saugleistung die von der Abscheidevorrichtung abgegebene Nichtkornbestandteile abzusaugen, bevor diese der Reinigungsvorrichtung zugeführt werden.

Somit ist es die Aufgabe der vorliegenden Erfindung einen Mähdrescher gemäß dem Oberbegriff des Anspruches 1 derart weiterzubilden, dass die Nachteile des Standes der Technik zu umgehen und insbesondere eine Reduzierung der Belastung der Reinigungsvorrichtung durch Nichtkornbestandteile zu erreichen.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß dem Anspruch 1 wird vorgeschlagen, dass unterhalb der Abscheidevorrichtung, im Wesentlichen achsparallel zu dieser, eine einen gerichteten Luftstrom abgebende Druckluftquelle angeordnet ist sowie zumindest eine im Wesentlichen achsparallel zu und beabstandet von der Druckluftquelle angeordnete Fördervorrichtung vorgesehen ist. Unter dem Begriff Druckluftquelle wird jede Vorrichtung verstanden, die einen gerichteten Luftstrom abgeben kann, unabhängig davon, ob es sich um eine aktive, das heißt einen Luftstrom erzeugende Vorrichtung, oder um eine passive Druckluftquelle, das heißt einer Vorrichtung, der Druckluft zugeführt wird, handelt. Mittels der im Kennzeichen des Hauptanspruches beschriebenen Anordnung einer Druckluftquelle und einer Fördervorrichtung lassen sich nach dem Austreten des Erntegutstromes aus der Abscheidevorrichtung durch den gerichteten Luftstrom der Druckluftquelle die Nichtkornbestandteile auf Grund ihres geringeren Gewichts von dem Korn trennen, bevor diese auf die Reinigungsvorrichtung gelangen. Die Fördervorrichtung transportiert die Nichtkornbestandteile ab. Dabei kann die Fördervorrichtung die Nichtkornbestandteile an eine Spreuverteilvorrichtung übergeben.

Vorteilhafterweise kann sich die Druckluftquelle zumindest abschnittsweise über die axiale Erstreckung der Abscheidevorrichtung erstrecken. Eine zumindest abschnittsweise Erstreckung kann sowohl bei Mähdreschen, die ausschließlich nach dem Axialflussprinzip arbeiten, das heißt, dass sowohl das Dreschen als auch das Abscheiden durch die Axialabscheidevorrichtung durchgeführt werden, als auch bei Mähdreschern die eine tangential angeordnete Drescheinrichtung und eine dieser nachgeordnete, nach dem Axialflussprinzip arbeitende Abscheidevorrichtung aufweisen, sinnvoll sein. In beiden Fällen gibt es Abschnitte, insbesondere im vorderen Bereich der Abscheidevorrichtung, aus denen ein Erntegutstrom austritt, dessen Anteil an Korn deutlich höher ist als der Nichtkornbestandteil, so dass der angestrebte Effekt der Reduzierung von Nichtkornbestandteilen, die auf die Reinigungseinrichtung gelangen können, vergleichsweise gering ist. Mit zunehmender Abscheidung in Längsrichtung der Abscheidevorrichtung gesehen, sinkt der Kornanteil im Verhältnis zum Nichtkornanteil. In diesem hinteren Abschnitt der Abscheidevorrichtung ist der Effekt, der durch den Einsatz der Druckluftquelle erzielbar ist, deutlich größer. Zur Maximierung des Effektes kann sich die Druckluftquelle über die gesamte Erstreckung der Abscheidevorrichtung erstrecken.

Insbesondere kann die Strömungsrichtung des von der Luftdruckquelle abgegebenen Luftstromes unter einem Winkel zur Abgaberichtung des von der Abscheidevorrichtung abgegebenen Erntegutes geneigt sein. Bevorzugt kann der Winkel 90°oder mehr zur Abgaberichtung betragen, beziehungsweise einen Winkel größer 0°zur Oberfläche der Reinigungsvorrichtung, so dass ein aufwärts, in Richtung der Abscheidevorrichtung gerichteter Luftstrom aus der Druckluftquelle austritt. Der Luftstrom trifft somit quer zur Abgabe- beziehungsweise Fallrichtung der Korn- und Nichtkornbestandteile auf diese auf. Die leichten Nichtkornbestandteile werden zumindest anteilig vom Luftstrom in dessen Strömungsrichtung abgedrängt und der Fördervorrichtung zugeführt. Vorzugsweise kann die Druckluftquelle oberhalb eines Förderbodens angeordnet sein, wobei der Abstand zur Oberfläche des Förderbodens geringer ist als der Abstand zu den Abscheidekörben der Abscheidevorrichtung. Der größere Abstand der Druckluftquelle zu den Abscheidekörben der Abscheidevorrichtung ist von Vorteil, da damit die Zeitdauer, während der der abgegebene Erntegutstrom der Luftströmung ausgesetzt ist, vergrößert wird.

Alternativ kann die Druckluftquelle oberhalb eines Siebes der Reinigungsvorrichtung angeordnet sein, wobei der Abstand zur Oberfläche des Siebes geringer ist als der Abstand zu den Abscheidekörben der Abscheideeinrichtung. Diese Ausführungsform ist bei Mähdreschern denkbar, bei denen der von der Abscheidevorrichtung abgegebene Erntegutstrom unmittelbar an die Reinigungsvorrichtung abgegeben wird, das heißt, die keinen zwischengeschalteten Förderboden aufweisen.

Gemäß einer bevorzugten Ausführung kann die Fördervorrichtung als Förderschnecke ausgebildet sein. Die Förderschnecke kann in einem Trog angeordnet sein, der die Förderschnecke in ihrer Umfangsrichtung abschnittsweise umgibt. Vorteilhaft hieran ist, dass ein schneller Abtransport der Nichtkornbestandteile gegeben ist. Zudem ist die Neigung zu einer Gutansammlung in der Fördervorrichtung sehr gering.

In einer alternativen Ausführung kann die Fördervorrichtung als ein Förderband ausgebildet sein. Das Förderband erlaubt die Abführung großer Mengen an Nichtkornbestandteilen.

Vorteilhafterweise kann die Druckluftquelle zur Beaufschlagung mit Druckluft mit einem Gebläse verbunden sein. Dadurch kann eine zentrale Ansteuerung realisiert werden.

Alternativ kann die Druckluftquelle als zumindest ein Gebläse ausgeführt sein. So können beispielsweise mehrere Gebläse in Längsrichtung des Mähdreschers nebeneinander angeordnet sein.

Dabei kann das zumindest eine Gebläse mittels einer Steuerungseinrichtung steuer- oder regelbar sein. Die Steuer- oder Regelbarkeit des zumindest einen Gebläses erlaubt eine Anpassung an Ernteguteigenschaften, wie die Feuchte des Erntegutes, was Einfluss auf das Flugverhalten der Nichtkornbestandteile hat, oder die Erntegutart. Bei einer Mehrzahl von nebeneinander angeordneten Gebläsen können diese individuell angesteuert werden.

Insbesondere kann das Gebläse als Reinigungsgebläse der Reinigungsvorrichtung ausgeführt sein. Somit kann auf ein zusätzliches separates Gebläse verzichtet werden.

Vorzugsweise kann dass die Druckluftquelle kanalförmig ausgebildet sein. Hierzu kann die Druckluftquelle als ein geschlossener hohlzylindrischer Leitungsabschnitt ausgebildet sein, der sich achsparallel zu der Abscheidevorrichtung erstreckt. Der Leitungsabschnitt kann mittels einen Gebläses, wie dem Reinigungsgebläse oder einem zusätzlichen separaten Gebläse, mit Druckluft beaufschlagt werden. Der Leitungsabschnitt kann zumindest eine Öffnung als Austrittsöffnung für den Luftstrom aufweisen. Beispielsweise kann nur eine schlitzförmige Öffnung vorgesehen sein, die sich nahezu durchgehend in Längsrichtung des Leitungsabschnittes erstreckt. Alternativ können mehrere Öffnungen vorgesehen sein, die sich in Längsrichtung des Leitungsabschnittes erstrecken. Weiterhin können die Öffnungen einen kreisförmigen oder vieleckigen Öffnungsquerschnitt aufweisen.

Vorteilhafterweise kann die Strömungsrichtung des aus der Druckluftquelle austretenden Luftstromes entgegen der Rotationsrichtung des zumindest einen Axialtrennrotors gerichtet sein. Der Impuls, welcher von dem zumindest einen Axialtrennrotor während der Abscheidung auf das Korn übertragen wird, ist größer, als der Impuls, der auf die Nichtkornbestandteile übertragen wird. Somit kann der entgegen der Rotationsrichtung des Axialtrennrotors aufgeprägte Luftstrom stärker auf die Nichtkornbestandteile einwirken und deren Bewegungsbahn verändern, als dies bei dem abgeschiedenen Korn der Fall ist.

Bevorzugt kann bei Abscheideeinrichtungen mit nur einem Axialtrennrotor die Druckluftquelle und die Fördervorrichtung einander gegenüberliegend Seitenwänden eines die Axialabscheideeinrichtung umgebenden Gehäuses zugeordnet sein. Durch die außermittige Anordnung wird verhindert, dass die Druckluftquelle oder die Fördervorrichtung den Abgang von Korn und Nichtkornbestandteilen durch Abscheidekörbe der Abscheidevorrichtung behindern oder es zu unerwünschten Ablagerungen kommt.

Weiterhin kann bei Abscheideeinrichtungen mit mehr als einem Axialtrennrotor die Druckluftquelle im Wesentlichen mittig zwischen zwei Seitenwänden eines die Axialabscheideeinrichtung umgebenden Gehäuses und jeweils eine Fördervorrichtung unmittelbar benachbart zu den Seitenwänden angeordnet sein.

Die vorliegende Erfindung wird nachstehend anhand von in den Zeichnungen dargestellten Ausführungsbeispielen näher erläutert.

Es zeigen:
- Fig. 1: eine schematische Teilansicht eines Mähdreschers;
- Fig. 2: eine schematische Frontansicht eines Aufgabeendes 3a einer Trenneinrichtung 2 gemäß Fig.1;
- Fig. 3: eine schematische Frontansicht eines Aufgabeendes 3a einer Trenneinrichtung 2 gemäß einer zweiten Ausführungsform,
- Fig. 4: eine Teilansicht des rückwärtigen Bereiches des Mähdreschers gemäß Fig. 1.

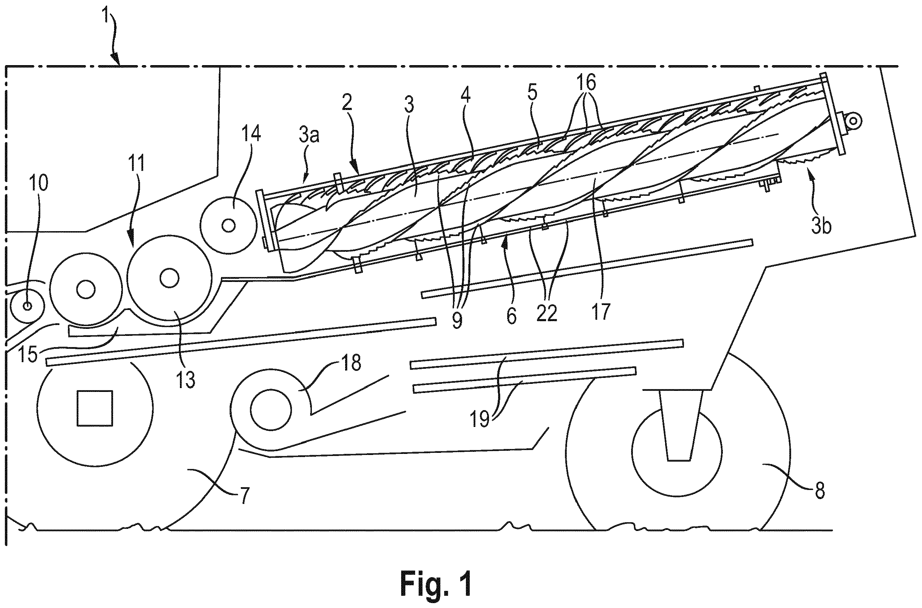

Der in der Fig. 1 teilweise dargestellte Mähdrescher 1 ist mit einer nach dem Axialflussverfahren arbeitenden Trenneinrichtung 2 ausgerüstet, die im Wesentlichen aus zumindest einem Trennrotor 3 besteht. Der zumindest eine Trennrotor 3 ist von einem Gehäuse 4 umschlossen. Dieses Gehäuse 4 besteht aus einem Oberteil in Form einer Haube 5 und einem Unterteil in Form eines aus einer Mehrzahl von Einzelkörben 22 bestehenden Abscheidekorbes 6. Im dargestellten Ausführungsbeispiel liegt die Drehachse jedes Trennrotors 3 quer zu den Radachsen von Räderpaaren 7, 8 des Mähdreschers. Demzufolge ist die Förderrichtung jedes Trennrotors 3 entgegengesetzt zur Vorwärtsfahrtrichtung des Mähdreschers 1. Ferner ist im dargestellten Ausführungsbeispiel die Drehachse jedes Trennrotors 3 gegen die Horizontale geneigt, wobei sie nach hinten, das heißt in Richtung eines Abgabeendes 3b jedes Trennrotors 3 ansteigt. Um das Dreschgut kontinuierlich zu transportieren, sind auf den Trennrotormantel 17 mehrere wendelförmig oder spiralförmig verlaufende Förderleisten 9 aufgesetzt, deren äußere Kanten gezahnt sind. Damit die kontinuierliche Förderung des Dreschgutes gewährleistet ist, sind an der Innenseite der Haube 5 und gegebenenfalls auch an der Innenseite des Abscheidekorbes 6 Leitstege 16 angesetzt, die entweder achsparallel zur Drehachse jedes Trennrotors 3 oder ebenfalls wendel- oder spiralförmig verlaufen können. Unterhalb des Abscheidekorbes 6 befindet sich ein Förderboden 21, welcher einem von dem Trennrotor 3 abgeschiedenen Erntegutstrom, der Korn sowie Nichtkornbestandteile, die insbesondere aus Kaff und Kurzstroh bestehen, umfasst, zugeführt werden.

Ferner ist der in der Fig. 1 nur teilweise dargestellte Mähdrescher 1 noch mit einem unterhalb des Trennrotors 3 liegenden Reinigungsgebläse 18 und einer ebenfalls unter des Trennrotors 3 liegenden Reinigungseinrichtung 19 ausgerüstet. In nicht näher dargestellter Weise ist im Austragende des Trennrotors 3 noch eine allgemein bekannte Verteilereinrichtung für das Häckselgut angeordnet. Außerdem ist der Mähdrescher 1 in an sich bekannter Weise mit einem nicht dargestellten Mähtisch und einem das Mähgut zu einem Dreschwerk 11 fördernden Schrägförderer 10 ausgerüstet, von dem nur das hintere Ende dargestellt ist. Das Dreschwerk 11 beinhaltet eine Vorbeschleunigungstrommel 12, eine Dreschtrommel 13, zumindest einen Dreschkorb 15 und eine Zuführtrommel 14, die unmittelbar vor einem Aufgabeende 3a des Trennrotors 3 quer zu dessen Drehachse gelagert sind. Unterhalb des Dreschwerkes 11 befindet sich ein so genannter Vorbereitungsboden 20, auf welchen von dem Dreschwerk 11 abgeschiedenes Erntegut, im Wesentlichen Korn, gelangt. Durch den Förderboden 21 wird der von der Trenneinrichtung 2 abgeschiedene Erntegutstrom an den Vorbereitungsboden 20 übergeben. Vom Vorbereitungsboden 20 aus gelangt der Erntegutstrom auf Siebe der Reinigungseinrichtung 19, welche die Aufgabe hat, das ausgedroschene Korn von den Nichtkornbestandteilen zu trennen.

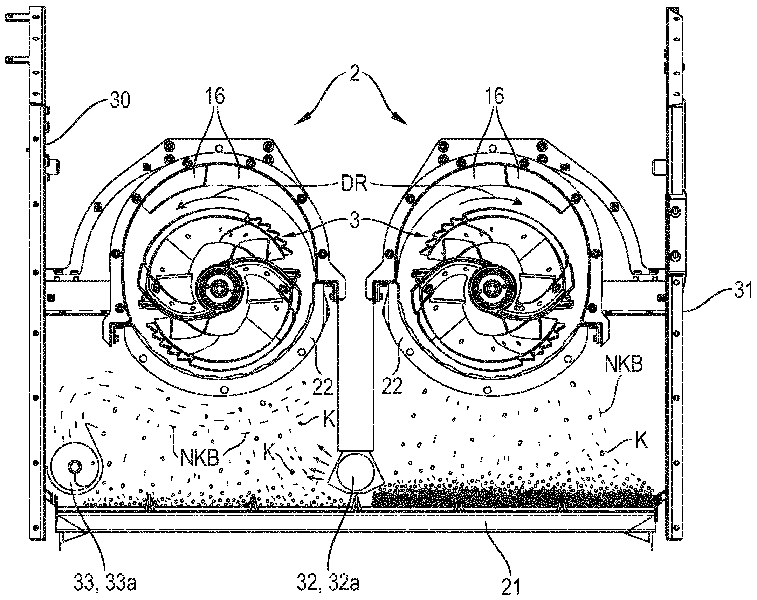

Die Darstellung in Fig. 2 zeigt eine schematische Frontansicht des Aufgabeendes 3a der Trenneinrichtung 2. Die Trenneinrichtung 2 ist zwischen einer linken Seitenwand 30 und einer rechten Seitenwand 31 des Mähdreschers 1 angeordnet. Die Darstellung zeigt zwei achsparallel angeordnete Trennrotoren 3, wobei auch eine Variante mit nur einem Trennrotor denkbar ist. Ein Pfeil DR kennzeichnet die Drehrichtung des jeweiligen Trennrotors 3, welche einander entgegengesetzt rotieren. Durch den jeweiligen Einzelkorb 22 des Abscheidekorbes 6 wird aus dem die Trenneinrichtung 2 in axialer Richtung des Mähdreschers 1 durchlaufenden Erntegutstrom Korn K sowie Nichtkornbestandteile NKB abgeschieden. Zur Veranschaulichung ist das einzelne Korn K als Kreis dargestellt, während die Nichtkornbestandteile NKB, die im Wesentlichen aus Kurzstroh und Kaff bestehen, als Linien dargestellt sind. Wie weiter oben geschildert gelangen das Korn K und die Nichtkornbestandteile NKB auf den Förderboden 21, der dieses Gemisch aus Korn K und Nichtkornbestandteilen NKB an die Reinigungseinrichtung 19 weiterleitet. Zwischen den beiden Trennrotoren 3 ist oberhalb des Förderbodens 21 eine Druckluftquelle 32 angeordnet. Unter dem Begriff Druckluftquelle 32 wird jede Vorrichtung verstanden, die einen gerichteten Luftstrom abgeben kann, unabhängig davon, ob es sich um eine aktive, das heißt einen Luftstrom erzeugende Vorrichtung, beispielsweise in Form eines Gebläses, oder um eine passive Druckluftquelle 32, das heißt einer Vorrichtung, der Druckluft zuführbar ist, handelt. Im dargestellten Ausführungsbeispiel ist die Druckluftquelle 32 als Gebläsekanal 32a ausgebildet. Die Anordnung der Druckluftquelle 32 ist unterhalb der Trenneinrichtung 2 und oberhalb des Förderbodens 21 gewählt, wobei der Abstand der Druckluftquelle 32 zum Förderboden 21 kleiner ist, als der zur Trenneinrichtung 2. Der Gebläsekanal 32a weist in Längsrichtung auf seinen den Trennrotoren 3 zugewandten Seiten jeweils zumindest eine Austrittsöffnung für die Druckluft auf. Bei nur einer Austrittsöffnung kann diese schlitzförmig ausgeführt sein. Sind mehrere Austrittsöffnungen vorgesehen, so können diese verschiedene geometrische Formen, beispielsweise eine kreisförmige, ovale oder polyedrische Form, aufweisen.

Zu der Druckluftquelle 32 beabstandet ist zumindest eine Fördervorrichtung 33 angeordnet, die im vorliegenden Ausführungsbeispiel als eine Förderschnecke 33a ausgebildet ist. Die Förderschnecke 33a ist im Wesentlichen achsparallel zu den Trennrotoren 3 angeordnet und erstreckt sich zumindest abschnittsweise zwischen dem Aufgabeende 3a und dem Abgabeendes 3b eines Trennrotors 3. Vorzugsweise ist jeweils eine Förderschnecke 33a an jeweils einer Seitenwand 30 und 31 des Mähdreschers 1 angeordnet. Die Abbildung in Fig. 2 zeigt jedoch nur eine an der linken Seitenwand 30 angeordnete Förderschnecke 33a, die zweite, nicht dargestellte Förderschnecke 33a ist spiegelbildlich an der rechten Seitenwand 31 angeordnet. Auch die Förderschnecken 33a sind jeweils unterhalb der Trenneinrichtung 2 und oberhalb des Förderbodens 21 angeordnet, wobei auch hier der Abstand zum Förderboden 21 kleiner ist, als der zur Trenneinrichtung 2.

Zur Veranschaulichung der Wirkungsweise ist in Fig. 2 auf der der linken Seitenwand 30 zugewandten Seite des Gebläsekanals 32a durch Pfeile P aus diesem ausströmende Luftstrom angedeutet. Die Strömungsrichtung des von der Luftdruckquelle 32 beziehungsweise dem Gebläsekanal 32a abgegebenen Luftstromes ist unter einem Winkel zu der Fallrichtung des von den Abscheidekörben 22 der Trenneinrichtung 2 abgegebenen Korns K und Nichtkornbestandteilen NKB geneigt. Wie der Darstellung in Fig. 2 zu entnehmen ist, bewirkt der von dem Gebläsekanal 32a abgegebene Luftstrom eine Vorseparierung von Korn K und Nichtkornbestandteilen NKB, während diese schwerkraftbedingt auf den Förderboden 21 fallen. Die Luftstrom bewirkt bei den erheblich leichteren Nichtkornbestandteilen NBK eine seitliche Ablenkung in Richtung der linken Seitenwand 30. Von der linken Seitenwand 30 gleiten die Nichtkornbestandteile NKB nach unten in Richtung der Förderschnecke 33a. Von dieser werden die Nichtkornbestandteile NKB in Längsrichtung des Mähdreschers 1 abgefördert. Der Anteil der Nichtkornbestandteile NKB, welche noch auf den Förderboden 21 gelangen, reduziert sich durch diese Maßnahme erheblich.

Wie aus der Darstellung in Fig. 2 weiter ersichtlich ist, fehlt auf der der rechten Seitenwand 31 zugewandten Seite des Gebläsekanals 32a dieser von dem Gebläsekanal 32a abgegebene Luftstrom. Entsprechend gelangen das von der Trenneinrichtung abgegebene Korn K und die Nichtkornbestandteile NKB vollständig auf den Förderboden 21 und bilden dort eine Gutmatte, die der nachgeordneten Reinigungseinrichtung 19 zugeführt wird, wie es dem bisherigen Stand der Technik entspricht.

Der besondere Effekt besteht darin, dass die sich zwischen Trenneinrichtung 2 und Förderboden 21 bestehende Fallstufe für eine Vorabscheidung von Nichtkornbestandteilen NKB genutzt wird, wodurch die Reinigungseinrichtung 19 eine deutliche Entlastung erfährt.

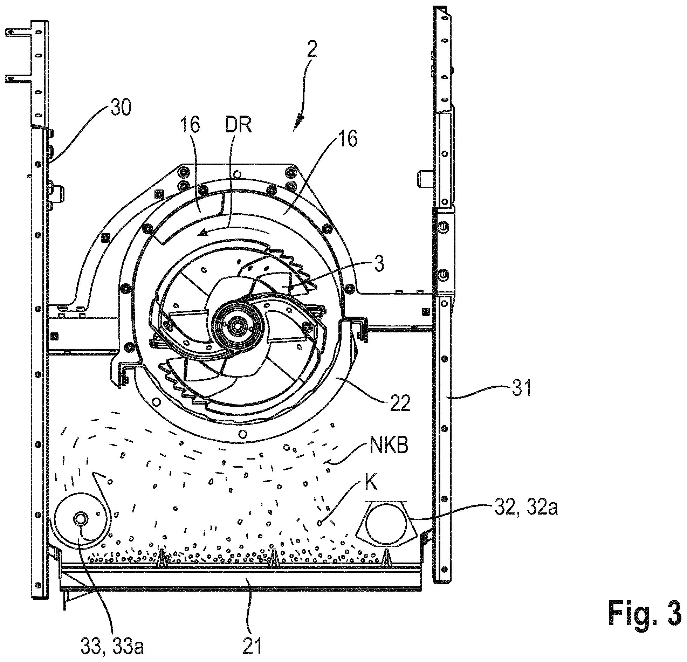

In Fig. 3 ist ein zweites Ausführungsbeispiel dargestellt. Bei diesem Ausführungsbeispiel weist die Trenneinrichtung 2 lediglich einen Trennrotor 3 auf. Im Übrigen entspricht die Trenneinrichtung 2 der ersten Ausführungsform gemäß Fig. 2, so dass für gleiche Bauteile die gleichen Bezugszeichen verwendet werden. Der Unterschied zur Ausführungsform gemäß Fig. 2 besteht darin, dass die Druckluftquelle 32 beziehungsweise der Gebläsekanal 32a der rechten Seitenwand 31 zugeordnet ist.

Der Gebläsekanal 32a ist mit einem Gebläse, wobei es sich beispielsweise das der Reinigungseinrichtung 19 zugeordnete Reinigungsgebläse 18 handeln kann, verbunden. Bevorzugt ist ein separates Gebläse vorgesehen, welches unabhängig von dem Reinigungsgebläse 18 ansteuerbar ist. Dies hat den Vorteil, dass sich Änderungen in der Drehzahl des Reinigungsgebläses 18, die auf Grund von sich ändernden Erntebedingungen während des laufenden Erntebetriebes des Mähdreschers 1 vorgenommen werden, nicht auf den von dem Gebläsekanal 32a abgegebenen Luftstrom hinsichtlich Strömungsgeschwindigkeit und Volumenstrom auswirken. Der aus der Druckluftquelle 32 beziehungsweise dem Gebläsekanal 32a austretende Luftstrom kann seinerseits an sich ändernde Ernte- und/oder Betriebsbedingungen angepasst werden.

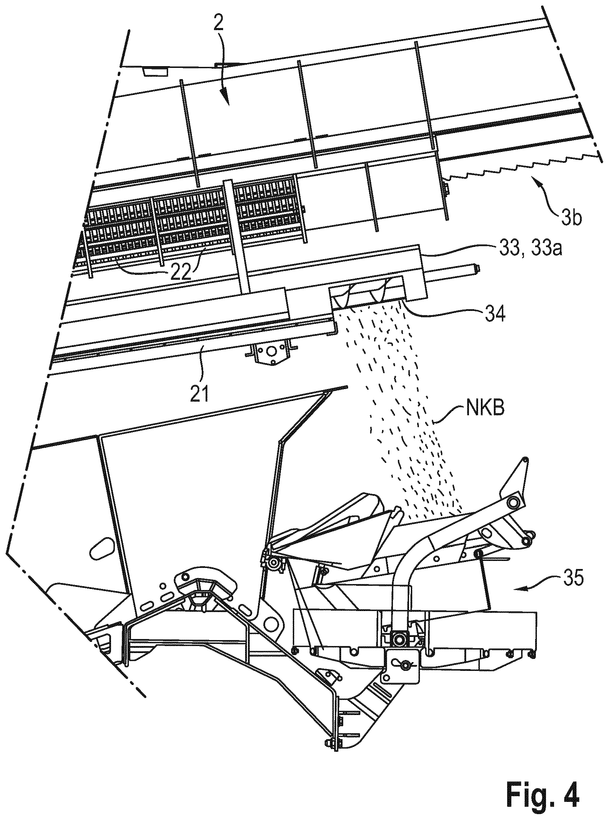

Die Darstellung in Fig. 4 zeigt eine Teilansicht des rückwärtigen Bereiches des Mähdreschers 1 gemäß Fig. 1. Wie der Darstellung zu entnehmen ist, mündet die als Förderschnecke 33a ausgebildete Fördervorrichtung 33 in einer Austrittsöffnung 34. Die Austrittsöffnung 34 der Förderschnecke 33a liegt oberhalb einer an und für sich bekannten Spreuverteilvorrichtung 35, wie sie üblicherweise an Mähdreschern vorgesehen ist. Die von der Druckluftquelle 32 nach dem Austritt aus der Trenneinrichtung 2 abgeschiedenen Nichtkornbestandteile NKB gelangen mittels der Förderschnecke 33a unter Umgehung der Reinigungseinrichtung 19 zum Spreuverteiler 35 und werden von diesem auf den Boden ausgebracht.

**Bezugszeichenliste**

| | | | |
|---|---|---|---|
| **1** | Mähdrescher | **33a** | Förderschnecke |
| **2** | Trenneinrichtung | **34** | Austrittsöffnung |
| **3** | Trennrotor | **35** | Spreuverteileinrichtung |
| **3a** | Aufgabeende | | |
| **3b** | Abgabeende | **DR** | Drehrichtung |
| **4** | Gehäuse | **K** | Korn |
| **5** | Haube | **NKB** | Nichtkornbestandteile |
| **6** | Abscheidekorb | | |
| **7** | Räderpaar | | |
| **8** | Räderpaar | | |
| **9** | Förderleisten | | |
| **10** | Schrägförderer | | |
| **11** | Dreschwerk | | |
| **12** | Vorbeschleunigungstrommel | | |
| **13** | Dreschtrommel | | |
| **14** | Zuführtrommel | | |
| **15** | Dreschkorb | | |
| **16** | Leitstege | | |
| **17** | Trennrotormantel | | |
| **18** | Reinigungsgebläse | | |
| **19** | Reinigungseinrichtung | | |
| **20** | Vorbereitungsboden | | |
| **21** | Förderboden | | |
| **22** | Einzelkorb | | |
| **30** | Linke Seitenwand | | |
| **31** | Rechte Seitenwand | | |
| **32** | Druckluftquelle | | |
| **32a** | Gebläsekanal | | |
| **33** | Fördervorrichtung | | |

## Patentansprüche

1. Mähdrescher (1) mit einer nach dem Axialflussprinzip arbeitenden Abscheidevorrichtung (2) zur Separierung von Bestandteilen eines Erntegutstromes, umfassend zumindest einen Axialtrennrotor (3) sowie diesen zumindest abschnittsweise in Umfangsrichtung umgebende Abscheidekörbe(6, 22), und einer Reinigungseinrichtung (19), der ein Teil des von der Abscheidevorrichtung (2) separierten Erntegutstromes zuführbar ist, **dadurch gekennzeichnet, dass** unterhalb der Abscheidevorrichtung (2), im Wesentlichen achsparallel zu dieser, eine einen gerichteten Luftstrom abgebende Druckluftquelle (32) angeordnet ist sowie zumindest eine im Wesentlichen achsparallel zu und beabstandet von der Druckluftquelle (32) angeordnete Fördervorrichtung (33) vorgesehen ist.

2. Mähdrescher (1) nach Anspruch1, **dadurch gekennzeichnet, dass** sich die Druckluftquelle (32) zumindest abschnittsweise über die axiale Erstreckung der Abscheidevorrichtung (2) erstreckt.

3. Mähdrescher (1) nach einem der Ansprüche 1 oder 2, **dadurch gekennzeichnet, dass** die Strömungsrichtung des von der Luftdruckquelle (32) abgegebenen Luftstromes unter einem Winkel zur Abgaberichtung des von der Abscheidevorrichtung (2) abgegebenen Erntegutes geneigt ist.

4. Mähdrescher (1) nach einem der Ansprüche 1 bis 3, **dadurch gekennzeichnet, dass** die Druckluftquelle (32) oberhalb eines Förderbodens (21) angeordnet ist, wobei der Abstand zur Oberfläche des Förderbodens (21) geringer ist als der Abstand zu den Abscheidekörben (6, 22) der Abscheideeinrichtung (2).

5. Mähdrescher (1) nach einem der Ansprüche 1 bis 3, **dadurch gekennzeichnet, dass** die Druckluftquelle (32) oberhalb eines Siebes der Reinigungsvorrichtung (19) angeordnet ist, wobei der Abstand zur Oberfläche des Siebes geringer ist als der Abstand zu den Abscheidekörben (6, 22) der Abscheideeinrichtung (2).

6. Mähdrescher (1) nach einem der Ansprüche 1 bis 5, **dadurch gekennzeichnet, dass** die Fördervorrichtung (33) als Förderschnecke (33a) ausgebildet ist.

7. Mähdrescher (1) nach einem der Ansprüche 1 bis 5, **dadurch gekennzeichnet, dass** die Fördervorrichtung (33) als Förderband ausgebildet ist.

8. Mähdrescher (1) nach einem der Ansprüche 1 bis 7, **dadurch gekennzeichnet, dass** die Druckluftquelle (32) zur Beaufschlagung mit Druckluft mit einem Gebläse verbunden ist.

9. Mähdrescher (1) nach Anspruch 8, **dadurch gekennzeichnet, dass** das Gebläse mittels einer Steuerungseinrichtung steuer- oder regelbar ist.

10. Mähdrescher (1) nach einem der Ansprüche 8 oder 9, **dadurch gekennzeichnet, dass** das Gebläse als Reinigungsgebläse (18) der Reinigungsvorrichtung (19) ausgeführt ist.

11. Mähdrescher (1) nach einem der Ansprüche 1 bis 10, **dadurch gekennzeichnet, dass** die Druckluftquelle (32) kanalförmig ausgebildet ist.

12. Mähdrescher (1) nach einem der Ansprüche 1 bis 11, **dadurch gekennzeichnet, dass** die Strömungsrichtung des aus der Druckluftquelle (32) austretenden Luftstromes entgegen der Rotationsrichtung des zumindest einen Axialtrennrotors (3) gerichtet ist.

13. Mähdrescher (1) nach einem der Ansprüche 1 bis 12, **dadurch gekennzeichnet, dass** bei Abscheidevorrichtungen (2) mit nur einem Axialtrennrotor (3) die Druckluftquelle (32) und die Fördervorrichtung (33) einander gegenüberliegenden Seitenwänden (30, 31) eines die Axialabscheidevorrichtung (2) umgebenden Gehäuses zugeordnet sind.

14. Mähdrescher (1) nach einem der Ansprüche 1 bis 12, **dadurch gekennzeichnet, dass** bei Abscheidevorrichtungen (2) mit mehr als einem Axialtrennrotor (3) die Druckluftquelle (32) im Wesentlichen mittig zwischen zwei Seitenwänden (30, 31) eines die Axialabscheidevorrichtung (2) umgebenden Gehäuses und jeweils eine Fördervorrichtung (33) unmittelbar benachbart zu den Seitenwänden (30, 31) angeordnet ist.

## Claims

1. A combine harvester (1) comprising a separating device (2) operating on the axial flow principle for separating constituent parts of a flow of crop material, including at least one axial separating rotor (3) and separating concaves (6, 22) which surround same at least portion-wise in the peripheral direction, and a cleaning device (19) to which a part of the flow of crop material separated by the separating device (2) can be passed, **characterised in that** a compressed air source (32) which delivers a directed air flow is arranged beneath the separating device (2) in substantially axis-parallel relationship therewith and there is provided at least one conveyor device (33) which is arranged substantially in axis-parallel relationship with and spaced from the compressed air source (32).

2. A combine harvester (1) according to claim 1 **characterised in that** the compressed air source (32) extends at least portion-wise over the axial extent of the separating device (2).

3. A combine harvester (1) according to one of claims 1 and 2 **characterised in that** the flow direction of the air flow delivered by the compressed air source (32) is inclined at an angle to the discharge direction of the crop material discharged by the separating device (2).

4. A combine harvester (1) according to one of claims 1 to 3 **characterised in that** the compressed air source (32) is arranged above a conveyor floor (21), wherein the spacing relative to the surface of the conveyor floor (21) is less than the spacing relative to the separating concaves (6, 22) of the separating device (2).

5. A combine harvester (1) according to one of claims 1 to 3 **characterised in that** the compressed air source (32) is arranged above a sieve of the cleaning device (19), wherein the spacing relative to the surface of the sieve is less than the spacing relative to the separating concaves (6, 22) of the separating device (2).

6. A combine harvester (1) according to one of claims 1 to 5 **characterised in that** the conveyor device (33) is in the form of a conveyor screw (33a).

7. A combine harvester (1) according to one of claims 1 to 5 **characterised in that** the conveyor device (33) is in the form of a conveyor belt.

8. A combine harvester (1) according to one of claims 1 to 7 **characterised in that** the compressed air source (32) is connected to a blower for supplying compressed air.

9. A combine harvester (1) according to claim 8 **characterised in that** the blower is open-loop or closed-loop controllable by means of a control device.

10. A combine harvester (1) according to one of claims 8 and 9 **characterised in that** the blower is in the form of a cleaning blower (18) of the cleaning device (19).

11. A combine harvester (1) according to one of claims 1 to 10 **characterised in that** the compressed air source (32) is of a passage-shaped configuration.

12. A combine harvester (1) according to one of claims 1 to 11 **characterised in that** the flow direction of the air flow issuing from the compressed air source (32) is directed in opposite relationship to the direction of rotation of the at least one axial separating rotor (3).

13. A combine harvester (1) according to one of claims 1 to 12 **characterised in that** in the case of separating devices (2) with only one axial separating rotor (3) the compressed air source (32) and the conveyor device (33) are associated with mutually opposite side walls (30, 31) of a housing surrounding the axial separating device (2).

14. A combine harvester (1) according to one of claims 1 to 12 **characterised in that** in separating devices (2) with more than one axial separating rotor (3) the compressed air source (32) is arranged substantially centrally between two side walls (30, 31) of a housing surrounding the axial separating device (2) and a receptive conveyor device (33) is arranged directly adjacent to the side walls (30, 31).

## Revendications

1. Moissonneuse-batteuse (1) comprenant un dispositif de séparation (2) fonctionnant selon le principe du flux axial pour séparer des éléments constitutifs du flux de produit récolté, comprenant au moins un rotor de séparation axial (3) ainsi que des corbeilles de séparation (6, 22) entourant celui-ci au moins par endroits dans la direction circonférentielle, et un équipement de nettoyage (19) auquel peut être amenée une partie du flux de produit récolté séparée par le dispositif de séparation (2), **caractérisée en ce qu'**en dessous du dispositif de séparation (2), de manière sensiblement parallèle axialement à celui-ci, est disposée une source d'air comprimé (32) délivrant un courant d'air dirigé ainsi qu'en ce qu'est au moins prévu un dispositif de convoyage (33) disposé de manière parallèle axialement à et à distance de la source d'air comprimé (32).

2. Moissonneuse-batteuse (1) selon la revendication 1, **caractérisée en ce que** la source d'air comprimé (32) s'étend au moins par endroits sur l'extension axiale du dispositif de séparation (2) .

3. Moissonneuse-batteuse (1) selon une des revendications 1 ou 2, **caractérisée en ce que** la direction d'écoulement du courant d'air délivré par la source d'air comprimé (32) est inclinée selon un angle par rapport à la direction de délivrance du produit récolté délivré par le dispositif de séparation (2).

4. Moissonneuse-batteuse (1) selon une des revendications 1 à 3, **caractérisée en ce que** la source d'air comprimé (32) est disposée au-dessus d'une table de préparation (21), la distance à la surface de la table de préparation (21) étant inférieure à la distance aux corbeilles de séparation (6, 22) de l'équipement de séparation (2) .

5. Moissonneuse-batteuse (1) selon une des revendications 1 à 3, **caractérisée en ce que** la source d'air comprimé (32) est disposée au-dessus d'un tamis du dispositif de nettoyage (19), la distance à la surface du tamis étant inférieure à la distance aux corbeilles de séparation (6, 22) de l'équipement de séparation (2).

6. Moissonneuse-batteuse (1) selon une des revendications 1 à 5, **caractérisée en ce que** le dispositif de convoyage (33) est conformé en vis de convoyage (33a).

7. Moissonneuse-batteuse (1) selon une des revendications 1 à 5, **caractérisée en ce que** le dispositif de convoyage (33) est conformé en convoyeur à bande.

8. Moissonneuse-batteuse (1) selon une des revendications 1 à 7, **caractérisée en ce que**, pour son alimentation en air comprimé, la source d'air comprimé (32) est reliée à un ventilateur.

9. Moissonneuse-batteuse (1) selon la revendication 8, **caractérisée en ce que** le ventilateur est commandable ou régulable au moyen d'un équipement de commande.

10. Moissonneuse-batteuse (1) selon une des revendications 8 ou 8, **caractérisée en ce que** le ventilateur est conformé en ventilateur de nettoyage (18) du dispositif de nettoyage (19).

11. Moissonneuse-batteuse (1) selon une des revendications 1 à 10, **caractérisée en ce que** la source d'air comprimé (32) est conformée en canal.

12. Moissonneuse-batteuse (1) selon une des revendications 1 à 11, **caractérisée en ce que** la direction d'écoulement du courant d'air sortant de la source d'air comprimé (32) est dirigée à l'opposé de la direction de rotation du au moins un rotor de séparation axial (3).

13. Moissonneuse-batteuse (1) selon une des revendications 1 à 12, **caractérisé en ce que**, dans le cas des dispositifs de séparation (2) à un seul rotor de séparation axial (3), la source d'air comprimé (32) et le dispositif de convoyage (33) sont associés à des parois latérales opposées (30, 31) d'un carter entourant le dispositif de séparation axial (2).

14. Moissonneuse-batteuse (1) selon une des revendications 1 à 12, **caractérisée en ce que**, dans le cas des dispositifs de séparation (2) à plus d'un rotor de séparation axial (3), la source d'air comprimé (32) est disposée sensiblement au centre entre deux parois latérales (30, 31) d'un carter entourant le dispositif de séparation axial (2), et un dispositif de convoyage (33) est disposé directement au voisinage de chacune des parois latérales (30, 31).
